(19) Europäisches Patentamt
European Patent Office
Office européen des brevets

(11) EP 3 936 551 B1

(12) EUROPEAN PATENT SPECIFICATION

(45) Date of publication and mention of the grant of the patent:
**15.06.2022 Bulletin 2022/24**

(21) Application number: **20767117.3**

(22) Date of filing: **20.02.2020**

(51) International Patent Classification (IPC):
***C08G 64/02*** *(2006.01)* ***C09D 5/02*** *(2006.01)*
***C09D 175/04*** *(2006.01)* ***C08G 18/44*** *(2006.01)*
***C08G 64/40*** *(2006.01)* ***C08G 64/42*** *(2006.01)*

(52) Cooperative Patent Classification (CPC):
**C08G 64/305; C08G 18/44; C08G 18/792; C08G 64/0216; C08G 64/42; C09D 5/022; C09D 175/04**

(86) International application number:
**PCT/JP2020/006730**

(87) International publication number:
**WO 2020/179462 (10.09.2020 Gazette 2020/37)**

(54) **POLYCARBONATE DIOL**

POLYCARBONATDIOL

POLYCARBONATE DIOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2019 JP 2019039374**

(43) Date of publication of application:
**12.01.2022 Bulletin 2022/02**

(73) Proprietor: **Asahi Kasei Kabushiki Kaisha**
**Tokyo 1000006 (JP)**

(72) Inventor: **UENO, Eizaburou**
**Tokyo 100-0006 (JP)**

(74) Representative: **Strehl Schübel-Hopf & Partner**
**Maximilianstrasse 54**
**80538 München (DE)**

(56) References cited:
**EP-A1- 2 559 718**
**EP-A1- 3 159 366**
**WO-A1-2015/016261**
**WO-A1-2018/190280**
**JP-A- 2007 154 070**
**JP-A- 2013 216 841**
**JP-A- 2015 143 216**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 936 551 B1

## Description

### Technical Field

The present invention relates to polycarbonate diols.

### Background Art

Polycarbonate diols are known, for example, as soft segments of polyurethanes and thermoplastic elastomers and the like, and as materials excellent in various properties such as hydrolysis resistance, light resistance, oxidation deterioration resistance and heat resistance. However, when polycarbonate diols are used as a component of coatings, adhesion to substrates may be insufficient depending on the type of the substrate.

A polycarbonate diol having the proportion of an ether group to a carbonate group of 0.01 mol% or more and 0.7 mol% or less is disclosed (for example, Patent Document 1). Further, a polycarbonate diol containing, as part of the structure thereof, a structural unit derived from at least one diol selected from isosorbide, isomannide and isoidide and a structural unit derived from 1,4-butanediol is disclosed (for example, Patent Document 2). Furthermore, a method for producing a polyurethane resin, characterized by reacting a polycarbonate diol having an allyl group of 0.35 mg-KOH/g or less (not including 0 mg-KOH/g) at the molecular terminals with an isocyanate is disclosed (For example, Patent Document 3).

### List of Prior Art Documents

### Patent Document

Patent Document 1: International Publication No. WO 2015-194670
Patent Document 2: Japanese Patent No. 6252070
Patent Document 3: Japanese Patent No. 5013159

### Summary of Invention

### Problems to be Solved by Invention

However, when the polycarbonate diol described in Patent Document 1 is used as a component of a coating, it has room for improvement from the viewpoint of chemical resistance and/or heat resistance of a coated film. Further, when the polycarbonate diol described in Patent Document 2 is used as a component of a coating, it has room for improvement from the viewpoint of flexibility and/or chemical resistance of a coated film. Furthermore, when the polycarbonate diol described in Patent Document 3 is used as a component of a coating, it has room for improvement from the viewpoint of adhesion to a substrate and/or strength of a coated film.

Accordingly, an object of the present invention is to provide a polycarbonate diol that can provide a coated film capable of securing at least one of chemical resistance and adhesion to a substrate, for example, when used as a component of a coating. Another object of the present invention is to provide a polycarbonate diol that can provide a polyurethane capable of securing at least one of mechanical strength, heat resistance and flexibility, for example, when used as a raw material for the polyurethane.

### Means for Solving Problems

As a result of diligent research to solve the above-described problems, the present inventor has found that the objects can be achieved by using a polycarbonate diol having a specific proportion of terminals having a specific structure, to complete the present invention.

That is, embodiments of the present invention include:

[1] A polycarbonate diol comprising a repeating unit represented by the following formula (A) and a terminal hydroxyl group,

wherein more than 0 mol% and not more than 3.0 mol% of the terminals thereof is an oxolane terminal represented by the following formula (B):

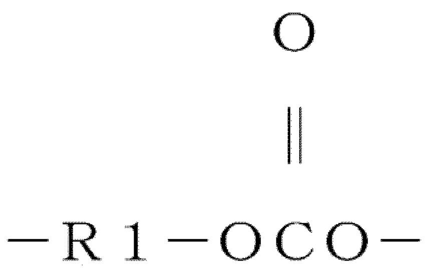

(A)

wherein R1 represents a divalent aliphatic or alicyclic hydrocarbon having 2 to 12 carbon atoms; and

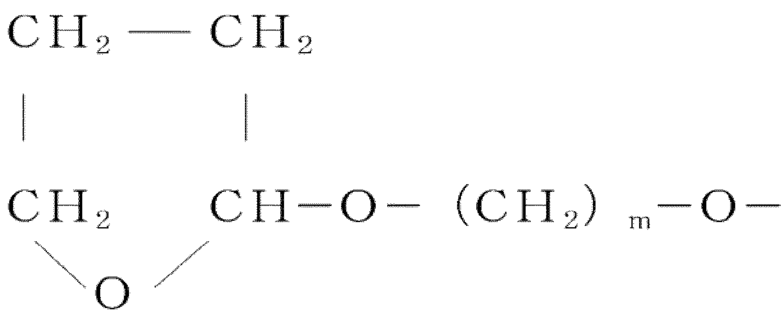

(B)

wherein m represents an integer of 1 to 6.

[2] The polycarbonate diol according to [1], wherein the repeating unit represented by the formula (A) comprises a repeating unit represented by the following formula (C) and a repeating unit represented by the following formula (D),

wherein a molar ratio of the repeating unit represented by the following formula (C) to the repeating unit represented by the following formula (D) (formula (C): formula (D) is 10:90 to 90:10:

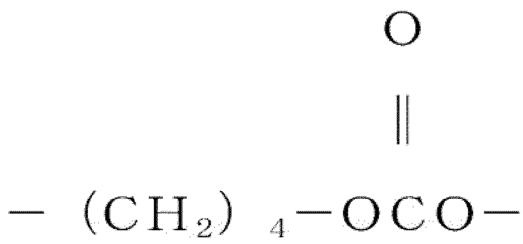

(C)

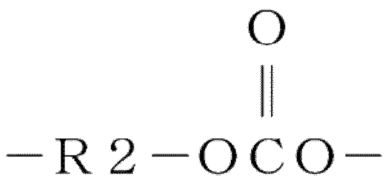

(D)

wherein R2 represents a divalent aliphatic or alicyclic hydrocarbon having 3 to 8 carbon atoms, different from $-(CH_2)_4-$ in the formula (C).

[3] The polycarbonate diol according to [2], wherein the repeating unit represented by the formula (D) comprises a repeating unit represented by the following formula (E):

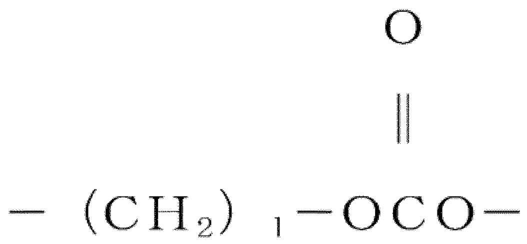 (E)

wherein 1 represents an integer of 3 to 6 excluding 4.

[4] The polycarbonate diol according to any one of [1] to [3], wherein the oxolane terminal represented by the formula (B) comprises an oxolane terminal represented by the following formula (F):

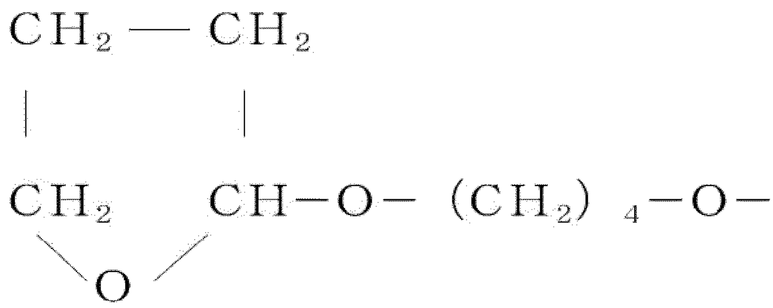 (F)

.

[5] A coating composition comprising the polycarbonate diol according to any one of [1] to [4] and an organic polyisocyanate.

[6] A coating composition comprising a urethane prepolymer obtained by reacting the polycarbonate diol according to any one of [1] to [4] with an organic polyisocyanate, wherein the urethane prepolymer has a terminal isocyanate group.

[7] A coating composition comprising a polyurethane resin obtained by reacting the polycarbonate diol according to any one of [1] to [4], an organic polyisocyanate and a chain extender with each other.

[8] A water-based coating composition comprising a polyurethane obtained by reacting water, the polycarbonate diol according to any one of [1] to [4], an organic polyisocyanate and a chain extender with each other.

[9] A thermoplastic polyurethane obtained by using the polycarbonate diol according to any one of [1] to [4] and an organic polyisocyanate.

Advantages of Invention

According to the present invention, a polycarbonate diol that can provide a coated film capable of securing at least one of chemical resistance and adhesion to a substrate when used as a component of a coating can be provided. The polycarbonate diol of the present invention can also provide a polyurethane capable of securing at least one of mechanical strength, heat resistance and flexibility when used as a raw material for the polyurethane.

The polycarbonate diol of the present invention can be suitably used as a component of a coating and as a raw material for a polyurethane, because it can ensure the above-described properties (at least one property selected from the group consisting of chemical resistance, adhesion to a substrate, mechanical strength, heat resistance and flexibility).

Mode for Carrying Out Invention

Hereinafter, modes for carrying out the present invention (a mode for carrying out the present invention is hereinafter abbreviated as "the present embodiment") will be described in detail.

A polycarbonate diol of the present embodiment comprises a repeating unit represented by the following formula (A) and a terminal hydroxyl group:

$$-R1-O\overset{\overset{\displaystyle O}{\|}}{C}O- \qquad (A)$$

wherein R1 represents a divalent aliphatic or alicyclic hydrocarbon having 2 to 12 carbon atoms, and each R1 in the structure of the repeating unit may be the same as or different from another one.

The repeating unit represented by the formula (A) preferably comprises a repeating unit represented by the following formula (C) and a repeating unit represented by the following formula (D), and the molar ratio of the repeating unit represented by the following formula (C) to the repeating unit represented by the following formula (D) (formula (C):formula (D)) is preferably 10:90 to 90:10:

$$-(CH_2)_4-O\overset{\overset{\displaystyle O}{\|}}{C}O- \qquad (C)$$

$$-R2-O\overset{\overset{\displaystyle O}{\|}}{C}O- \qquad (D)$$

wherein R2 represents a divalent aliphatic or alicyclic hydrocarbon having 3 to 8 carbon atoms, different from $-(CH_2)_4-$ in the formula (C), and each R2 in the structure of the repeating unit may be the same as or different from another one.

The molar ratio of the repeating unit represented by the formula (C) to the repeating unit represented by the formula (D) (formula (C):formula (D)) of 35:65 to 65:35 is preferable because the polycarbonate diol tends to be liquid at room temperature, and the molar ratio of 40:60 to 60:40 is more preferable because the polycarbonate diol tends to be liquid even at a temperature of -5°C.

The repeating unit represented by the formula (D) preferably comprises a repeating unit represented by the following formula (E):

$$-(CH_2)_1-O\overset{\overset{\displaystyle O}{\|}}{C}O- \qquad (E)$$

wherein 1 represents an integer of 3 to 6 excluding 4, and each 1 in the structure of the repeating unit may be the same as or different from another one.

When the repeating unit represented by the formula (D) comprises the repeating unit represented by the formula (E), chemical resistance of the coated film tends to be enhanced.

The polycarbonate diol of the present embodiment has an oxolane terminal represented by the following formula (B) at more than 0 mol% and not more than 3.0 mol% of the terminals thereof:

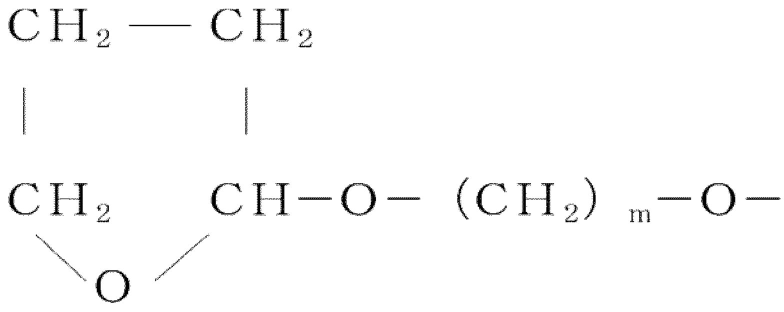

(B)

wherein m represents an integer of 1 to 6.

The polycarbonate diol of the present embodiment, containing a specific proportion of the structure of the formula (B) at the terminals thereof, can provide a coated film capable of securing at least one of chemical resistance and adhesion to a substrate, for example, when used as a component of a coating. In one aspect, the polycarbonate diol of the present embodiment, containing a specific proportion of the structure of the formula (B) at the terminals thereof, can enhance adhesion to a substrate without impairing chemical resistance of the resulting coated film, for example, when used as a component of a coating.

It is not clear why the above-described effects can be obtained as a result of the polycarbonate diol containing a specific proportion of the structure of the formula (B) at the terminals thereof, but the present inventor considers it to be due to the following reasons.

A polycarbonate diol (the terminals of which are a OH group) generally has high adhesion to a polycarbonate resin or a polyester resin having a structure similar to that of the polycarbonate resin, but does not have sufficient adhesion to a polymethyl methacrylate (PMMA) resin or the like. In contrast, the polycarbonate diol of the present embodiment contains a specific proportion of the oxolane structure of the formula (B) at the terminals thereof, and the polarity thereof is thereby higher, resulting in enhancement in adhesion to a substrate.

In another aspect, if the proportion of an oxolane structure of the formula (B) is kept in a specific range, the proportion of a OH group at the terminals can be prevented from being excessively decreased. Since the proportion of the OH group at the terminals can be prevented from being excessively decreased, a decrease in the crosslink density can be prevented, and at least one property selected from the group consisting of chemical resistance, strength of a coating film and heat resistance can be thereby secured.

In further another aspect, the presence of an oxolane structure of the formula (B) at the terminals can control the crosslink density in a suitable range, and flexibility of a coated film can be secured.

In one aspect, the proportion of an oxolane structure of the formula (B) at the terminals of the polycarbonate diol of the present embodiment is preferably exceeds the detection limit when determined by the method hereinbelow described in the Example. In the present embodiment, when the polycarbonate diol contains the oxolane structure of the formula (B) in a specific proportion at the terminals thereof, it is expected that the effects of the present invention can be achieved.

The polycarbonate diol of the present embodiment preferably has a structure of the formula (B) at 0.003 mol% or more, 0.005 mol% or more, 0.008 mol% or more or 0.01 mol% or more of the terminals thereof, because the use thereof, for example, as a component of a coating tends to further enhance adhesion of the resulting coated film. On the other hand, the polycarbonate diol of the present embodiment preferably has a structure of the formula (B) at 2.5 mol% or less, 2.0 mol% or less, 1.5 mol% or less, 1.2 mol% or less, 1.0 mol% or less, 0.90 mol% or less, 0.85 mol% or less, 0.70 mol% or less, 0.55 mol% or less or 0.50 mol% or less of the terminals thereof, because the use thereof, for example, as a component of a coating tends to provide a tougher coated film. The polycarbonate diol of the present embodiment preferably has the proportion of the oxolane terminal represented by the formula (B) of 0.01 to 2.0 mol% at the terminals thereof, because the use of, for example, as a raw material of a thermoplastic polyurethane provides a polyurethane having a high molecular weight and enables the molecular weight to be easily controlled. From the viewpoint of easily achieving the effects of the present invention, the proportion of an oxolane terminal represented by the formula (B) at the terminals thereof is more preferably 0.01 to 1.5 mol%, further more preferably 0.02 to 1.2 mol%, and particularly preferably 0.02 to 0.1 mol%.

In the present embodiment, the proportion of an oxolane terminal represented by the formula (B) can be determined by the method hereinbelow described in the Example.

The oxolane terminal represented by the formula (B) preferably comprises an oxolane terminal represented by the following formula (F):

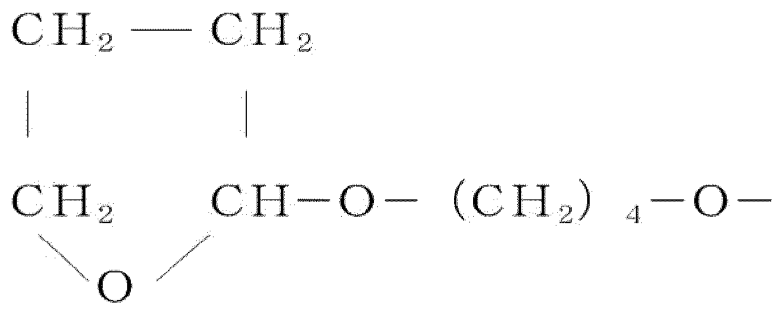

(F)

.

When the oxolane terminal represented by the formula (B) comprises an oxolane terminal represented by the formula (F), adhesion of the resulting coated film tends to be enhanced.

A method for obtaining the polycarbonate diol of the present embodiment is not particularly limited, but, for example, an monomer having an oxolane structure represented by the formula (B) (such as at least one compound selected from the group consisting of 2-(1-hydroxymethoxy)oxolane, 2-(2-hydroxyethoxy)oxolane, 2-(3-hydroxypropoxy)oxolane, 2-(4-hydroxybutoxy)oxolane, 2-(5-hydroxypentaoxy)oxolane and 2-(6-hydroxyhexaoxy)oxolane) may be blended with a raw material and be subjected to polymerization; or alternatively the monomer having an oxolane structure represented by the formula (B) may be added after reaching the desired molecular weight and subjected to heating with stirring. The proportion of the oxolane terminal represented by the formula (B) can be controlled by adjusting the amount of the oxolane raw material (the monomer having a structure represented by the formula (B)). The conditions for heating with stirring include preferably stirring at 100 to 200°C for 30 minutes to 10 hours.

The polycarbonate diol of the present embodiment is preferably liquid at room temperature (for example, 25°C), because it does not need to be dissolved when used. The polycarbonate diol of the present embodiment is more preferably liquid at -5°C. In the present embodiment, whether the polycarbonate diol is a liquid can be confirmed by the method hereinbelow described in the Example.

The polycarbonate diol of the present embodiment may comprise at least one cyclic ether compound selected from the group consisting of tetrahydrofuran, tetrahydropyran and oxepane. In the polycarbonate diol of the present embodiment, the content of the cyclic ether compound is preferably 0.01 to 50 ppm and more preferably 0.01 to 5 ppm.

In the present embodiment, the content of the cyclic ether compound can be determined by the method hereinbelow described in the Example. In the present embodiment, the polycarbonate diol, even in the form of a composition containing a cyclic ether compound, water or trace components such as a metal element in a polycarbonate diol, is referred to as "polycarbonate diol".

The polycarbonate diol of the present embodiment may also contain a structure having a repeating unit represented by the following formula (G) in its molecule for the purpose of imparting flexibility:

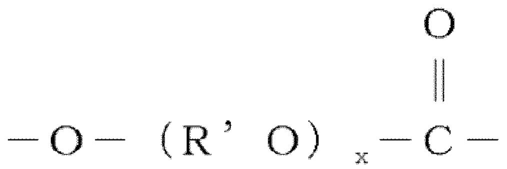

(G)

wherein each R' represents an alkylene group and two or more alkylene groups may be contained in all the repeating units, and x represents an integer of 2 or more.

The method for introducing the repeating unit of the formula (G) into a molecule of the polycarbonate diol includes, but not particularly limited to, adding, to a raw material diol, an ether-based polyol such as polyoxyethylene glycol, polyoxyethylene propylene glycol, polyoxyethylene tetramethylene glycol, polyoxytetramethylene glycol or polyoxypropylene glycol, or alternatively adding, to the molecule, an alkylene oxide such as ethylene oxide and/or propylene oxide during the polymerization.

In the polycarbonate diol of the present embodiment, the content of the repeating unit of the formula (G) in the molecule is not particularly limited as long as it does not affect the present invention, but is preferably in the following range. When the repeating unit represented by the formula (G) is introduced into the polycarbonate diol, the repeating unit represented by the formula (G) (having a structure derived from an ether) is preferably 0.05 to 5 mol% and more preferably 0.05 to 3 mol%, relative to the repeating unit of the carbonate represented by the formula (A), from the

viewpoint of suppressing a deterioration in the heat resistance and/or chemical resistance of the resulting polyurethane.

The number average molecular weight of the polycarbonate diol of the present embodiment is preferably 300 to 5000. The polycarbonate diol having a number average molecular weight of 300 or more tends to provide flexibility of a coated film. The polycarbonate diol having a number average molecular weight of 5000 or less is preferable, because, when used as a component of a coating, the solid content concentration is not easily restricted and moldability of the resulting polyurethane is not easily deteriorate. The number average molecular weight of the polycarbonate diol of the present embodiment is more preferably 450 to 3000, from the same viewpoints as described above.

In the present embodiment, the number average molecular weight of the polycarbonate diol of the present embodiment can be measured by the method hereinbelow described in the Example.

In the polycarbonate diol of the present embodiment, the water content is preferably 1 to 500 ppm. The polycarbonate diol of the present embodiment, having the water content of 500 ppm or less, is preferable, because it does not easily become clouded by reaction with water and an isocyanate and it can easily provide a smooth coated film. The polycarbonate diol of the present embodiment, having the water content of 1 ppm or more, is preferable, because a carbonate compound is easily dispersed in the polycarbonate diol. The water content is preferably 5 to 250 ppm and is more preferably 10 to 150 ppm, due to its more remarkable effect.

In the present embodiment, the water content of the polycarbonate diol can be confirmed by the method hereinbelow described in the Example.

The polycarbonate diol of the present embodiment has preferably a color number of 5 to 100. The polycarbonate diol of the present embodiment having a color number of 100 or less is preferable, because coloration is less likely to be seen in a coated film. The polycarbonate diol of the present embodiment having a color number of 5 or more is preferable, because the polycarbonate diol is not easily restricted in the production conditions thereof. The color number is preferably 5 to 50 and is more preferably 5 to 30, due to its more remarkable effect.

The method for obtaining the polycarbonate diol having a color number in the above-described range includes, but not particularly limited to, a method for carrying out polymerization at a temperature of 200°C or less and preferably 170°C or less.

In the present embodiment, the color number of the polycarbonate diol can be determined according to "Determination of color number of polycarbonate diols" hereinbelow described in the Example.

A method for producing the polycarbonate diol of the present embodiment is not particularly limited. The polycarbonate diol of the present embodiment can be produced, for example, by various methods described by Schnell, in Polymer Reviews, Vol. 9, pages 9 to 20 (1994).

The polycarbonate diol of the present embodiment is produced using, as raw materials, for example, but particularly limited to, a diol and a carbonate.

Examples of the diol used in the present embodiment include, but not particularly limited to, diols having no side chain such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol and 1,15-pentadecanediol; diols having a side chain such as 2-methyl-1,8-octanediol, 2-ethyl-1,6-hexanediol, 2-methyl-1,3-propanediol, 3-methyl-1,5-pentanediol, 2,4-dimethyl-1,5-pentanediol, 2,4-diethyl-1,5-pentanediol, 2-butyl-2-ethyl-1,3-propanediol and 2,2-dimethyl-1,3-propanediol; and cyclic diols such as 1,4-cyclohexanedimethanol and 2-bis(4-hydroxycyclohexyl)propane. One or two or more of the diols described above may be used as a raw material for producing a polycarbonate diol. The use of 1,4-butanediol and one or two or more of 1,3-propanediol, 1,5-pentanediol, 1,6-hexanediol, 2-methyl-1,3-propanediol, 3-methyl-1,5-pentanediol and 2,2-dimethyl-1,3-propanediol as raw materials for a polycarbonate diol is preferable, because a coated film tends to be enhanced in chemical resistance.

When two or more diols are used as raw materials in the production of a polycarbonate diol of the present embodiment, the ratio of these raw materials is not particularly limited. The charging amounts are preferably set at a molar ratio of 10/90 to 90/10. The molar ratio in this range easily reduces the crystallinity of the resulting polycarbonate diol and easily provides a flexible coated film. The molar ratio in the range of 35/65 to 65/35 is more preferable because the resulting polycarbonate diol is liquid at room temperature, and the molar ratio in the range of 40/60 to 60/40 is further more preferable because the resulting polycarbonate diol is liquid even at -5°C or less.

A compound having three or more hydroxyl groups per molecule such as trimethylolethane, trimethylolpropane, hexanetriol or pentaerythritol can be used as a raw material for the polycarbonate diol of the present embodiment, in the proportion that does not impair the performance of the polycarbonate diol. When the compound having three or more hydroxyl groups per molecule is excessively used as a raw material for the polycarbonate diol, crosslinking occurs during the polymerization reaction of the polycarbonate, leading to gelation. Therefore, even when a compound having three or more hydroxyl groups per molecule is used as a raw material for a polycarbonate diol, the compound is preferably 0.1 to 5 mol% based on the total number of moles of diols used as a raw material for the polycarbonate diol. This proportion is more preferably 0.1 to 1 mol%.

Examples of the carbonate used as a raw material for producing the polycarbonate diol of the present embodiment include, but not particularly limited to, dialkyl carbonates such as dimethyl carbonate, diethyl carbonate, dipropyl

carbonate and dibutyl carbonate; diaryl carbonates such as diphenyl carbonate; and alkylene carbonates such as ethylene carbonate, trimethylene carbonate, 1,2-propylene carbonate, 1,2-butylene carbonate, 1,3-butylene carbonate and 1,2-pentylene carbonate. One or two or more of these carbonates can be used a raw material for the polycarbonate diol. From the viewpoint of availability and ease of setting the conditions for polymerization reaction, it is preferable to use dimethyl carbonate, diethyl carbonate, diphenyl carbonate, dibutyl carbonate or ethylene carbonate.

In the production of the polycarbonate diol of the present embodiment, a catalyst is preferably added. Examples of the catalyst include, but not particularly limited to, alcoholates, hydrides, oxides, amides, carbonates, hydroxides and nitrogen-containing borates of alkali metals such as lithium, sodium and potassium and alkaline earth metals such as magnesium, calcium, strontium and barium, as well as basic alkali metal salts and alkaline earth metal salts of organic acids. Further examples of the catalyst include, but not particularly limited to, metals, salts, alkoxides and organic compounds of aluminum, titanium, vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth and ytterbium. One or more catalysts of them can be selected and used. One or more catalysts selected from metals, salts, alkoxides or organic compounds of sodium, potassium, magnesium, potassium, titanium, zirconium, tin, lead and ytterbium is preferably used, because it allows the polymerization of the polycarbonate diol to be carried out successfully and it has little effect on the urethane reaction using the resulting polycarbonate diol. Titanium, ytterbium, tin or zirconium is more preferably used as the catalyst.

The polycarbonate diol of the present embodiment may contain the above-described catalyst in the amount of 0.0001 to 0.02% by mass in terms of metal element, as measured by using ICP (Inductively Coupled Plasma) analyzer. The content of the catalyst within the above range allows the polymerization of the polycarbonate diol to be carried out successfully and it has little effect on the urethane reaction using the resulting polycarbonate diol. The content of the catalyst is more preferably 0.0005 to 0.01% by mass.

The content of at least one metal element selected from the group consisting of titanium, ytterbium, tin and zirconium in the polycarbonate diol of the present embodiment is preferably 0.0001 to 0.02% by mass and more preferably 0.0005 to 0.01% by mass, as measured by an ICP analyzer. The total content of titanium, ytterbium, tin and zirconium in the polycarbonate diol of the present embodiment is preferably 0.0001 to 0.02% by mass and more preferably 0.0005 to 0.01% by mass, as measured by an ICP analyzer.

In the present embodiment, the content of the metal element in the polycarbonate diol can be measured by the method hereinbelow described in the Example.

When the polycarbonate diol of the present embodiment is used, for example, as a raw material for a polyurethane, the catalyst that has used in the production of the polycarbonate diol is preferably treated with a phosphorus compound. Examples of the phosphorus compound include, but not particularly limited to, phosphate triesters such as trimethyl phosphate, triethyl phosphate, tributyl phosphate, di-2-ethylhexyl phosphate, triphenyl phosphate, tricresyl phosphate and cresyl diphenyl phosphate; acid phosphate esters such as methyl acid phosphate, ethyl acid phosphate, propyl acid phosphate, isopropyl acid phosphate, butyl acid phosphate, lauryl acid phosphate, stearyl acid phosphate, 2-ethylhexyl acid phosphate, isodecyl acid phosphate, butoxyethyl acid phosphate, oleyl acid phosphate, tetracosyl acid phosphate, ethylene glycol acid phosphate, 2-hydroxyethyl methacrylate acid phosphate, dibutyl phosphate, monobutyl phosphate, monoisodecyl phosphate and bis(2-ethylhexyl) phosphate; phosphite esters such as triphenyl phosphite, tris(nonylphenyl) phosphite, tricresyl phosphite, triethyl phosphite, tris(2-ethylhexyl) phosphite, tridecyl phosphite, trilauryl phosphite, tris(tridecyl) phosphite, trioleyl phosphite, diphenyl mono(2-ethylhexyl) phosphite, diphenyl monodecyl phosphite, diphenyl (monododecyl) phosphite, trilauryl phosphite, diethyl hydrogen phosphite, bis(2-ethylhexyl) hydrogen phosphite, dilauryl hydrogen phosphite, dioleyl hydrogen phosphite, diphenyl hydrogen phosphite, tetraphenyl dipropylene glycol diphosphite, bis(decyl) pentaerythritol diphosphite, tristearyl phosphite, distearyl pentaerythritol diphosphite and tris(2,4-di-tert-butylphenyl) phosphite; as well as phosphoric acid, phosphorous acid and hypophosphorous acid.

The content of the phosphorus compound in the polycarbonate diol of the present embodiment is preferably 0.0001 to 0.02% by mass in terms of phosphorus element, as measured using an ICP analyzer. For example, when the polycarbonate diol of the present embodiment is used a raw material for a polyurethane, the content of the phosphorus compound within the above range in the polycarbonate diol can reduce the effect, of the catalyst used for the production of the polycarbonate diol, in the reaction for producing the polyurethane, and it also has little effect on the reaction for producing the polyurethane and physical properties of a reaction product. In addition, the presence of a catalyst for transesterification reaction in a polycarbonate diol can suppress the decomposition of a carbonate compound in the polycarbonate diol. The content of a phosphorus element in the polycarbonate diol of the present embodiment is more preferably 0.0005 to 0.01% by mass, as measured using an ICP analyzer.

Specific examples of a method for producing the polycarbonate diol of the present embodiment are illustrated below. The polycarbonate diol of the present embodiment can be produced, for example, but not particularly limited to, in two steps. A diol and a carbonate are blended at a molar ratio (diol:carbonate) of, for example, 20:1 to 1:10 and preferably 10:1 to 1:2, and are subjected to a reaction in a first step at 100 to 250°C under normal pressure or reduced pressure. When dimethyl carbonate is used as a carbonate, the methanol produced can be removed as a mixture thereof

with dimethyl carbonate to obtain a low-molecular-weight polycarbonate diol. When diethyl carbonate is used as a carbonate, the ethanol produced can be removed as a mixture thereof with diethyl carbonate to obtain a low-molecular-weight polycarbonate diol. When ethylene carbonate is used as a carbonate, the ethylene glycol produced can be removed as a mixture thereof with ethylene carbonate to obtain a low-molecular-weight polycarbonate diol. The next reaction at a second step is a reaction in which the reaction product obtained in the first step is heated at 160 to 250°C under reduced pressure to remove unreacted diol and carbonate and to condense the low-molecular-weight polycarbonate diol until a polycarbonate diol having a predetermined molecular weight is obtained.

<Uses>

The polycarbonate diol of the present embodiment can be used as a component for a coating or an adhesive, as a raw material for a polyurethane or a thermoplastic elastomer, and as a modifier for a polyester or a polyimide. In particular, when the polycarbonate diol of the present embodiment is used as a component of a coating, it can provide a coating film having a smooth surface and a good balance of performance such as strength and chemical resistance. In addition, when the polycarbonate diol of the present embodiment is used as a raw material for a polyurethane or a thermoplastic elastomer, it can produce a polyurethane or a thermoplastic elastomer that provides a coated film having a smooth surface and being tough and excellent in chemical resistance.

The thermoplastic polyurethane of the present embodiment can be obtained by using the above-described polycarbonate diol and an organic polyisocyanate.

The coating composition of the present embodiment comprises the above-described polycarbonate diol and an organic polyisocyanate.

In addition, it is preferable that the coating composition of the present embodiment comprises a urethane prepolymer obtained by reacting the above-mentioned polycarbonate diol with an organic polyisocyanate and that the urethane prepolymer has an isocyanate terminal group.

Furthermore, the coating composition of the present embodiment more preferably comprises a polyurethane resin obtained by reacting the above-described carbonate diol, an organic polyisocyanate and a chain extender with each other, and is further more preferably a water-based coating composition comprising a polyurethane obtained by reacting water, the above-described carbonate diol, an organic polyisocyanate and a chain extender with each other.

Examples of the organic polyisocyanate used include, but not particularly limited to, known aromatic diisocyanates such as 2,4-tolylene diisocyanate, 2,6-tolylene diisocyanate and a mixture thereof (TDI), crude TDI, diphenylmethane-4,4'-diisocyanate (MDI), crude MDI, naphthalene-1,5-diisocyanate (NDI), 3,3'-dimethyl-4,4'-biphenylene diisocyanate, polymethylene polyphenyl isocyanate, xylylene diisocyanate (XDI) and phenylene diisocyanate; known aliphatic diisocyanates such as 4,4'-methylenebis(cyclohexyl diisocyanate) (hydrogenated MDI), hexamethylene diisocyanate (HMDI), isophorone diisocyanate (IPDI) and cyclohexane diisocyanate (hydrogenated XDI); and isocyanurate-modified products, carbodiimide-modified products and biuret-modified products of these isocyanates. These organic polyisocyanates may be used alone or in combination of two or more. Each of these organic polyisocyanates may be also used by masking its isocyanate group with a blocking agent.

A chain extender can be also used as a copolymerization component if desired, in the reaction of the polycarbonate diol with the organic polyisocyanate. The chain extender that can be used include, but not particularly limited to, chain extenders, conventionally used in the polyurethane industry, such as water, low-molecular-weight polyols and polyamines. Examples of the chain extender include, but not particularly limited to, low-molecular-weight polyols such as ethylene glycol, 1,3-propanediol, 1,4-butanediol, 1,5-pentanediol, 1,6-hexanediol, neopentyl glycol, 1,10-decanediol, 1,1-cyclohexanedimethanol, 1,4-cyclohexanedimethanol, xylylene glycol, bis(p-hydroxy)diphenyl and bis(p-hydroxyphenyl)propane; and polyamines such as ethylenediamine, hexamethylenediamine, isophorone diamine, xylylenediamine, diphenyldiamine and diaminodiphenylmethane. These chain extenders may be used alone or in combination of two or more.

A method for producing the coating composition (coating) of the present embodiment to be used is a production method known in the art. Examples of the coating composition that can be produced include: a twocomponent solvent-based coating composition used by mixing a coating base material obtained from the above-described polycarbonate diol and a curing agent composed of an organic polyisocyanate immediately before application; a one-component solvent-based coating composition comprising a urethane prepolymer having an isocyanate terminal group obtained by reacting the above-described polycarbonate diol and organic polyisocyanate; a one-component solvent-based coating composition comprising a polyurethane resin obtained by reacting the above-mentioned polycarbonate diol, organic polyisocyanate and chain extender with each other; and a one-component water-based coating composition.

The coating composition (coating) of the present embodiment may have an additive added thereto, depending on each type of uses, such as a curing accelerator (catalyst), a filler, a dispersant, a flame retardant, a dye, an organic or inorganic pigment, a mold release agent, a flow modifier, a plasticizer, an antioxidant, an ultraviolet absorber, a light stabilizer, an antifoamer, a leveling agent, a colorant or a solvent.

Examples of the solvent for the coating composition (coating) of the present embodiment include, but not particularly limited to, dimethylformamide, diethylformamide, dimethylacetamide, dimethyl sulfoxide, tetrahydrofuran, acetone, methyl ethyl ketone, methyl isobutyl ketone, dioxane, cyclohexanone, benzene, toluene, xylene, ethyl cellosolve, ethyl acetate, butyl acetate, ethanol, isopropanol, n-butanol and water. These solvents may be used alone or in a mixture of two or more.

The method for producing a thermoplastic polyurethane of the present embodiment to be used is not particularly limited and can be any polyurethanization reaction technique known in the polyurethane industry. For example, a thermoplastic polyurethane can be produced by reacting the above-described polycarbonate diol and organic polyisocyanate at a temperature of normal temperature to 200°C under atmospheric pressure. A chain extender, if used, may be added at the beginning of the reaction or may be added in the course of the reaction. For example, US Patent No. 5,070,173 can be referred to for the method for producing a thermoplastic polyurethane of the present embodiment.

Any known polymerization catalyst or solvent may be used for the polyurethanization reaction. Examples of the polymerization catalyst to be used include, but not particularly limited to, dibutyltin dilaurate.

The thermoplastic polyurethane of the present embodiment preferably has a stabilizer added thereto such as a heat stabilizer (such as an antioxidant) or a light stabilizer. The thermoplastic polyurethane of the present embodiment may also have an additive added thereto such as a plasticizer, an inorganic filler, a lubricant, a colorant, silicone oil, a foaming agent or a flame retardant.

## Examples

The present invention will be now illustrated with reference to Examples and Comparative Examples.

The following examples are described only for the purpose of illustration of the present invention, but are not intended to limit the scope of the present invention in any way.

The physical properties shown in the following Examples and Comparative Examples were determined as follows.

### 1. Determination of terminals of polycarbonate diol

The proportion of an oxolane terminal represented by the following formula (B) in terminals of a polycarbonate diol (hereinafter referred to as "oxolane terminal proportion") was determined as follows:

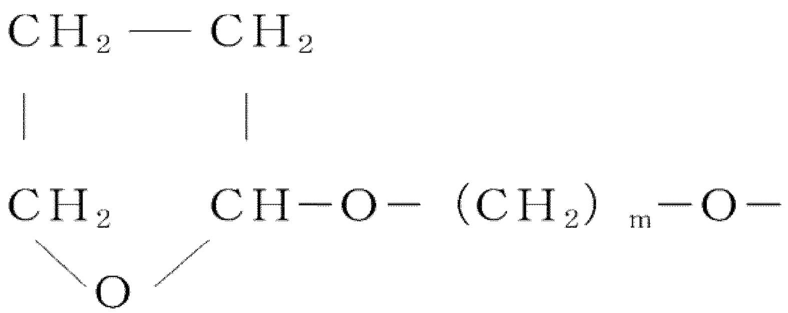

(B)

wherein m represents an integer of 1 to 6.

First, 70 g to 100 g of a polycarbonate diol was weighed out in a 300 ml eggplant-shaped flask. The polycarbonate diol in the eggplant-shaped flask was heated and stirred at a temperature of approximately 180°C under a pressure of 0.4 kPa or less by using a rotary evaporator connected with a bump trap for collecting fractions to obtain a fraction corresponding to approximately 1 to 2% by mass of the polycarbonate diol, that is, approximately 1 g (0.7 to 2 g) of an initial fraction in the bump trap. The obtained fraction was dissolved in approximately 100 g (95 to 105 g) of acetone and recovered as a solution. The recovered solution was subjected to gas chromatography analysis (hereinafter also referred to as "GC analysis"), and the oxolane terminal proportion in the polycarbonate diol was calculated from the value of the peak area in the obtained chromatograph according to the following expression (1). The GC analysis was carried out using HP 6890 Gas Chromatograph (manufactured by Hewlett-Packard, USA) provided with a DB-WAX column (manufactured by J & W, USA) having a length of 30 m and a film thickness of 0.25 μm and using a hydrogen flame ionization detector (FID) as a detector. The temperature rise profile for the column was a profile in which the temperature was raised from 60°C to 250°C at a rate of 10°C/min and then held at that temperature for 15 minutes. Each peak in the GC analysis was identified using the following gas chromatograph-mass spectrometer (GC-MS) system. The gas chromatograph system (GC system) used was HP 6890 Gas Chromatograph (manufactured by Hewlett-Packard, USA) provided with a DB-WAX column (manufactured by J & W, USA). In the GC system, the temperature was raised from an initial

temperature of 40°C to 220°C at a rate of 10°C/min. The mass spectrometer system (MS system) used was Auto-massSUN (manufactured by JEOL Ltd., Japan). In the MS system, the measurement was carried out with an ionization voltage of 70 eV, a scan range of m/z = 10 to 500 and a photomultiplier gain of 450 V.

$$\text{Oxolane terminal proportion (\%)} = B \div (A + B) \times 100 \quad (1)$$

A: Sum of peak areas of alcohols including diols (having 2 to 15 carbon atoms)
B: Sum of peak areas of compounds represented by the following formula (B-1)

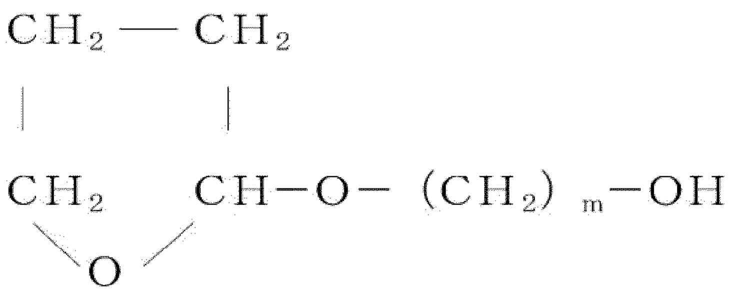

(B-1)

wherein m represents an integer of 1 to 6.

2. Determination of composition of polycarbonate diol

The composition of a polycarbonate diol was determined as follows. First, 1 g of a sample was weighed out in a 100 ml eggplant-shaped flask, and 30 g of ethanol and 4 g of potassium hydroxide were added thereto to obtain a mixture. The obtained mixture was heated in an oil bath at 100°C for one hour. The mixture was allowed to cool to room temperature, and one or two drops of phenolphthalein were then added to the mixture as an indicator and neutralized with hydrochloric acid. Thereafter, the mixture was cooled in a refrigerator for three hours to precipitate a salt. The precipitated salt was removed by filtration and the filtrate was analyzed by gas chromatography (GC). The GC analysis was carried out using GC-14B Gas Chromatograph (manufactured by Shimadzu Corporation, Japan) provided with a DB-WAX column (manufactured by J & W, USA) having a length of 30 m and a film thickness of 0.25 μm, using diethylene glycol diethyl ester as an internal standard, and using a hydrogen flame ionization detector (FID) as a detector. The temperature rise profile for the column was a profile in which the temperature was held at 60°C for five minutes and then raised from 60°C to 250°C at a rate of 10°C/min.

The composition of the polycarbonate diol was determined based on the value of the peak area of the diol obtained by GC analysis.

3. Determination of number average molecular weight of polycarbonate diol

The number average molecular weight of a polycarbonate diol was determined as follows. The hydroxyl value (OH value) was determined by "neutralization titration method (JIS K 0070-1992)" in which acetic anhydride and pyridine are used and titration was carried out with an ethanol solution of potassium hydroxide, and the number average molecular weight was calculated according to the following expression (2):

$$\text{Number average molecular weight} = 2/\{(\text{OH value} \times 10^{-3}/56.1)\} \quad (2)$$

4. Confirmation of state of polycarbonate diol

A polycarbonate diol was heated to 80°C, placed in a clear sample bottle, and allowed to cool to room temperature (25°C). The state of the polycarbonate diol at the temperature was visually observed. The state of the polycarbonate diol was designated as "liquid at room temperature" if the polycarbonate diol was clear and it flowed even slightly when

the sample bottle was tilted, and as "solid at room temperature" if the polycarbonate diol was opaque and/or it did not change in the state when the sample bottle was tilted. In addition, the visually observed state of the polycarbonate diol, which had been allowed to stand in a freezer set at -5°C for 8 hours, was designated as "liquid at -5°C " if it was clear and it flowed even slightly when the sample bottle was tilted, and as "solid at -5°C " if the polycarbonate diol was opaque and/or it did not change in the state when the sample bottle was tilted.

5. Analysis of contained elements by inductively coupled plasma (ICP) analyzer

Each element contained in a polycarbonate diol was analyzed as follows. First, a sample was weighed out in a Teflon (registered trademark) decomposition vessel, high-purity nitric acid (manufactured by KANTO CHEMICAL CO., INC.) was added thereto, and the sample was decomposed using a microwave decomposition device (ETHOS TC, manufactured by Milestone General K. K.). The sample was completely decomposed and the resulting decomposition solution was clear and colorless. Pure water was added to the decomposition solution to prepare a test solution. The resulting test solution was quantified with reference to the standard solution of each element using an inductively coupled plasma analyzer (iCAP6300 Duo manufactured by Thermo Fisher Scientific).

6. Quantification of cyclic ether compound in polycarbonate diol

The amount of a cyclic ether compound in a polycarbonate diol was determined as follows. Two grams of a sample was precisely weighed out and placed in a 20 ml vial, and the vial was sealed. The vial was heated at 100°C for three hours, and 1 ml of a gas phase was collected with a gas tight syringe heated at 100°C and was measured with GC/MS. The GC system used was 7890A Gas Chromatograph (manufactured by Agilent Technologies, Inc.), and the column used was Equity-1 (manufactured by Sigma-Aldrich) having a length of 30 m and a film thickness of 0.25 μm. The temperature rise profile was a profile in which the temperature was held at 40°C for 7 minutes, then raised from 40°C to 280°C at a rate of 10°C/min and held at that temperature for five minutes. The MS system used was Jms-Q1000GC (manufactured by JEOL Ltd., Japan). In the MS system, the measurement was carried out with an ionization voltage of 70 eV, a scan range of m/z = 10 to 500 and a photomultiplier gain of 1300 V. Quantification was carried out by creating a calibration curve using 1-butanol.

$$\text{Amount of cyclic ether compounds (ppm)} = (C/D) \times 1000 \quad (3)$$

C: Sum of cyclic ether compounds (mg)
D: Amount of sample (g)

7. Measurement of water content in polycarbonate diol

The water content in a polycarbonate diol was measured using a water content measurement device (KF-100 type, manufactured by Mitsubishi Chemical Analytech, Co., Ltd.) by a volumetric analysis method according to JIS K 0068.

8. Determination of color number of polycarbonate diol

The color number of a polycarbonate diol was determined by measuring the Hazen color number according to JIS K 0071-1.

9. Chemical resistance of coated films

In order to obtain a dry film thickness of 40 to 50 μm, the prepared coating composition was dropped onto a glass plate (JIS R 3202, 75 mm × 150 mm square, 1 mm in thickness) to which the desired number of pieces of a removal paper tape had been attached as spacers on both ends thereof, and was applied with a glass rod (8 mm in diameter). It was baked at 60°C for 30 minutes and dried on a horizontal table under an atmosphere of a temperature of 23°C and a relative humidity (RH) of 50% for one week to obtain a coated film. Visual evaluation was carried out for the appearance of the coated film after a cotton ball impregnated with oleic acid was allowed to stand on the coated film on the horizontal table for three minutes under an atmosphere of a temperature of 23°C and a relative humidity (RH) of 50%. The chemical resistance of the coated film was evaluated by classifying the degree and amount of defects as any one of six grades of 0 to 5.

10. Adhesion of coated films

In order to obtain a dry film thickness of 40 to 50 μm, the prepared coating composition was dropped onto a polymethyl methacrylate (PMMA) plate to which the desired number of pieces of a removal paper tape had been attached as spacers on both ends thereof, and was applied with a glass rod (8 mm in diameter). It was baked at 60°C for 60 minutes and dried for one week on a horizontal table under an atmosphere of a temperature of 23°C and RH of 50% to obtain a coated film. The adhesiveness (adhesion) of the obtained coated film was evaluated by classifying it as any one of six grades of 0 to 5 according to JIS K 5600-5-6 (cross-cut method).

11. Mechanical properties and flexibility of polyurethane film

A polyurethane film obtained from a polycarbonate diol was cut into strips of 10 mm × 80 mm and cured in a temperature-controlled room at a temperature of 23°C and RH of 50% for three days to obtain a test specimen. Breaking strength (unit: MPa) and breaking elongation (unit: %) was measured for the obtained test specimen at a distance between the points to be tested of 50 mm and a tensile rate of 100 mm/min with a TENSILON tensile tester (RTC-1250A, manufactured by ORIENTEC CORPORATION). The stress at 10% elongation (unit: MPa) was evaluated as flexibility of the polyurethane film.

12. Heat resistance of polyurethane film

A polyurethane film obtained from a polycarbonate diol was cut into strips of 10 mm × 80 mm to obtain a test specimen. The obtained test specimen was allowed to stand for five days in a hot air dryer set at 120°C. The breaking strength before and after the test each was determined according to the method described above in "11. Mechanical properties and flexibility of polyurethane films", and the heat resistance of the polyurethane film was calculated according to the following expression (4):

$$\text{Heat resistance (\%)} = (E/F) \times 100 \quad (4)$$

E: Breaking strength after test (MPa)
F: Breaking strength before test (MPa)

[Example 1]

Into a 2 L glass flask fitted with a fractionating column filled with regular fillings and a stirrer was charged 660 g (7.3 mol) of dimethyl carbonate, 400 g (4.4 mol) of 1,4-butanediol and 500 g (4.2 mol) of 1,6-hexanediol. In addition, 0.20 g of titanium tetraisopropoxide as a catalyst was added to the flask, and the mixture in the flask was stirred and heated under normal pressure to initiate the reaction. The initiation temperature of the reaction was adjusted to 140°C and the reaction was carried out at the same temperature for 20 hours. Then, the temperature was gradually raised to 160°C, and the reaction was carried out while distilling off a mixture of the methanol produced and dimethyl carbonate. Thereafter, the pressure in the flask was reduced to 10 kPa, and the reaction was carried out at 160°C for additional 10 hours while distilling off a mixture of diols and dimethyl carbonate. Next, 0.04 g of 2-(4-hydroxybutoxy)oxolane was added, and the mixture was stirred at 160°C for one hour. 0.22 Gram of 2-ethylhexyl acid phosphate as a phosphorus compound was added to the flask, and the mixture in the flask was heated at 100°C for 6 hours to obtain a polycarbonate diol. The analysis results of the obtained polycarbonate diol are shown in Table 1. This polycarbonate diol is abbreviated as PC-1. PC-1 contained a repeating unit represented by the following formula (A), a terminal hydroxyl group and an oxolane terminal represented by the following formula (F) .

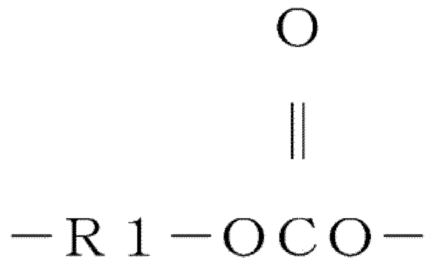

(A)

wherein R1 represents a divalent aliphatic or alicyclic hydrocarbon having 2 to 12 carbon atoms.

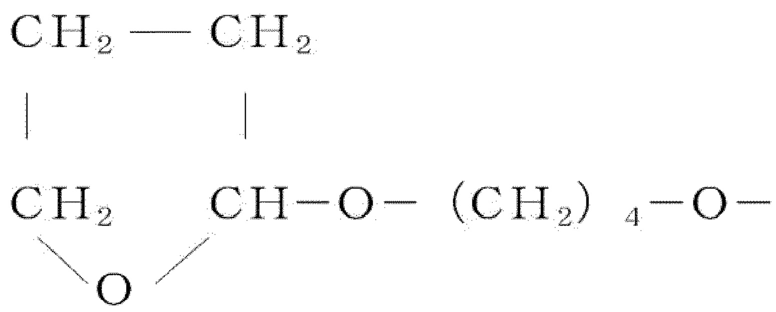

(F)

In PC-1, the amount of a cyclic ether compound was 1.2 ppm and the water content was 110 ppm.

[Example 2]

A polycarbonate diol was obtained in the same manner as in Example 1 except that the amount of 2-(4-hydroxybutoxy)oxolane added was changed to 0.12 g. The analysis results of the obtained polycarbonate diol are shown in Table 1. This polycarbonate diol is abbreviated as PC-2. PC-2 contained a repeating unit represented by the formula (A), a terminal hydroxyl group and an oxolane terminal represented by the formula (F).

[Example 3]

A polycarbonate diol was obtained in the same manner as in Example 1 except that the amount of 2-(4-hydroxybutoxy)oxolane added was changed to 0.36 g. The analysis results of the obtained polycarbonate diol are shown in Table 1. This polycarbonate diol is abbreviated as PC-3. PC-3 contained a repeating unit represented by the formula (A), a terminal hydroxyl group and an oxolane terminal represented by the formula (F).

[Example 4]

A polycarbonate diol was obtained in the same manner as in Example 1 except that the amount of 2-(4-hydroxybutoxy)oxolane added was changed to 0.58 g. The analysis results of the obtained polycarbonate diol are shown in Table 1. This polycarbonate diol is abbreviated as PC-4. PC-4 contained a repeating unit represented by the formula (A), a terminal hydroxyl group and an oxolane terminal represented by the formula (F).

[Example 1A]

A polycarbonate diol was obtained in the same manner as in Example 1 except that the amount of 2-(4-hydroxybutoxy)oxolane added was changed to 0.01 g. The analysis results of the obtained polycarbonate diol are shown in Table 1. This polycarbonate diol is abbreviated as PC-21. PC-21 contained a repeating unit represented by the formula (A), a terminal hydroxyl group and an oxolane terminal represented by the formula (F).

[Example 1B]

A polycarbonate diol was obtained in the same manner as in Example 1 except that the amount of 2-(4-hydroxybutoxy)oxolane added was changed to 0.77 g. The analysis results of the obtained polycarbonate diol are shown in Table 1. This polycarbonate diol is abbreviated as PC-22. PC-22 contained a repeating unit represented by the formula (A), a terminal hydroxyl group and an oxolane terminal represented by the formula (F).

[Example 5]

Into a 2 L glass flask fitted with a fractionating column filled with regular fillings and a stirrer was charged 750 g (8.2 mol) of ethylene carbonate, 400 g (4.4 mol) of 1,4-butanediol, 500 g (4.2 mol) of 1,6-hexanediol and 0.05 g of 2-(4-hydroxybutoxy)oxolane. In addition, 0.20 g of titanium tetraisopropoxide as a catalyst was added to the flask, and the mixture in the flask was stirred and heated under normal pressure to initiate the reaction. The initiation temperature of the reaction was adjusted to 140°C and the mixture was stirred at the same temperature for two hours. Then, the reaction temperature and the pressure were adjusted to 140 to 150°C and 3.0 to 5.0 kPa, respectively, and the reaction

was carried out for 25 hours while distilling off a mixture of the ethylene glycol produced and ethylene carbonate. Thereafter, the pressure was reduced to 0.5 kPa, and the reaction was carried out at 150 to 160°C for additional 10 hours while distilling off ethylene carbonate and diols. Next, 0.22 g of 2-ethylhexyl acid phosphate as a phosphorus compound was added to the flask, and the mixture in the flask was heated at 100°C for 10 hours to obtain a polycarbonate diol. The analysis results of the obtained polycarbonate diol are shown in Table 1. This polycarbonate diol is abbreviated as PC-5. PC-5 contained a repeating unit represented by the formula (A), a terminal hydroxyl group and an oxolane terminal represented by the formula (F).

[Example 6]

Into a 2 L glass flask fitted with a fractionating column filled with regular fillings and a stirrer was charged 680 g (7.7 mol) of ethylene carbonate, 200 g (2.2 mol) of 1,4-butanediol and 650 g (5.5 mol) of 1,6-hexanediol. In addition, 0.35 g of titanium tetraisopropoxide as a catalyst was added to the flask, and the mixture in the flask was stirred and heated under normal pressure to initiate the reaction. The initiation temperature of the reaction was adjusted to 140°C and the mixture was stirred at the same temperature for two hours. Then, the reaction temperature and the pressure were adjusted to 140 to 150°C and 3.0 to 5.0 kPa, respectively, and the reaction was carried out for 25 hours while distilling off a mixture of the ethylene glycol produced and ethylene carbonate. Thereafter, the pressure was reduced to 0.5 kPa, and the reaction was carried out at 150 to 160°C for additional 10 hours while distilling off ethylene carbonate and diols. Next, 0.08 g of 2-(4-hydroxybutoxy)oxolane was added, and the mixture was stirred at 160°C for one hour. Next, 0.39 g of 2-ethylhexyl acid phosphate as a phosphorus compound was added to the flask, and the mixture in the flask was heated at 100°C for 10 hours to obtain a polycarbonate diol. The analysis results of the obtained polycarbonate diol are shown in Table 1. This polycarbonate diol is abbreviated as PC-6. PC-6 contained a repeating unit represented by the formula (A), a terminal hydroxyl group and an oxolane terminal represented by the formula (F). In PC-6, the amount of cyclic ether compound was 0.7 ppm and the water content was 85 ppm.

[Example 7]

Into a 2 L glass flask fitted with a fractionating column filled with regular fillings and a stirrer was charged 640 g (7.3 mol) of ethylene carbonate, 260 g (2.9 mol) of 1,4-butanediol and 520 g (4.4 mol) of 1,6-hexanediol. In addition, 0.35 g of titanium tetraisopropoxide as a catalyst was added to the flask, and the mixture in the flask was stirred and heated under normal pressure to initiate the reaction. The initiation temperature of the reaction was adjusted to 140°C and the mixture was stirred at the same temperature for two hours. Then, the reaction temperature and the pressure were adjusted to 140 to 150°C and 3.0 to 5.0 kPa, respectively, and the reaction was carried out for 25 hours while distilling off a mixture of the ethylene glycol produced and ethylene carbonate. Thereafter, the pressure was reduced to 0.5 kPa, and the reaction was carried out at 150 to 160°C for additional 10 hours while distilling off ethylene carbonate and diols. Next, 0.09 g of 2-(4-hydroxybutoxy)oxolane was added, and the mixture was stirred at 160°C for one hour. Next, 0.39 g of 2-ethylhexyl acid phosphate as a phosphorus compound was added to the flask, and the mixture in the flask was heated at 100°C for 10 hours to obtain a polycarbonate diol. The analysis results of the obtained polycarbonate diol are shown in Table 1. This polycarbonate diol is abbreviated as PC-7. PC-7 contained a repeating unit represented by the formula (A), a terminal hydroxyl group and an oxolane terminal represented by the formula (F).

[Example 8]

Into a 2 L glass flask fitted with a fractionating column filled with regular fillings and a stirrer was charged 800 g (9.1 mol) of ethylene carbonate, 510 g (5.7 mol) of 1,4-butanediol and 400 g (3.4 mol) of 1,6-hexanediol. In addition, 0.35 g of titanium tetraisopropoxide as a catalyst was added to the flask, and the mixture in the flask was stirred and heated under normal pressure to initiate the reaction. The initiation temperature of the reaction was adjusted to 140°C and the mixture was stirred at the same temperature for two hours. Then, the reaction temperature and the pressure were adjusted to 140 to 150°C and 3.0 to 5.0 kPa, respectively, and the reaction was carried out for 25 hours while distilling off a mixture of the ethylene glycol produced and ethylene carbonate. Thereafter, the pressure was reduced to 0.5 kPa, and the reaction was carried out at 150 to 160°C for additional 10 hours while distilling off ethylene carbonate and diols. Next, 0.08 g of 2-(4-hydroxybutoxy)oxolane was added, and the mixture was stirred at 160°C for one hour. Next, 0.39 g of 2-ethylhexyl acid phosphate as a phosphorus compound was added to the flask, and the mixture in the flask was heated at 100°C for 10 hours to obtain a polycarbonate diol. The analysis results of the obtained polycarbonate diol are shown in Table 1. This polycarbonate diol is abbreviated as PC-8. PC-8 contained a repeating unit represented by the formula (A), a terminal hydroxyl group and an oxolane terminal represented by the formula (F).

[Example 9]

Into a 2 L glass flask fitted with a fractionating column filled with regular fillings and a stirrer was charged 750 g (8.5 mol) of ethylene carbonate, 550 g (6.1 mol) of 1,4-butanediol and 290 g (2.5 mol) of 1,6-hexanediol. In addition, 0.35 g of titanium tetraisopropoxide as a catalyst was added to the flask, and the mixture in the flask was stirred and heated under normal pressure to initiate the reaction. The initiation temperature of the reaction was adjusted to 140°C and the mixture was stirred at the same temperature for two hours. Then, the reaction temperature and the pressure were adjusted to 140 to 150°C and 3.0 to 5.0 kPa, respectively, and the reaction was carried out for 25 hours while distilling off a mixture of the ethylene glycol produced and ethylene carbonate. Thereafter, the pressure was reduced to 0.5 kPa, and the reaction was carried out at 150 to 160°C for additional 10 hours while distilling off ethylene carbonate and diols. Next, 0.08 g of 2-(4-hydroxybutoxy)oxolane was added, and the mixture was stirred at 160°C for one hour. Next, 0.39 g of 2-ethylhexyl acid phosphate as a phosphorus compound was added to the flask, and the mixture in the flask was heated at 100°C for 10 hours to obtain a polycarbonate diol. The analysis results of the obtained polycarbonate diol are shown in Table 1. This polycarbonate diol is abbreviated as PC-9. PC-9 contained a repeating unit represented by the formula (A), a terminal hydroxyl group and an oxolane terminal represented by the formula (F).

[Example 10]

Into a 2 L glass flask fitted with a fractionating column filled with regular fillings and a stirrer was charged 690 g (7.8 mol) of ethylene carbonate, 650 g (7.2 mol) of 1,4-butanediol and 80 g (0.7 mol) of 1,6-hexanediol. In addition, 0.35 g of titanium tetraisopropoxide as a catalyst was added to the flask, and the mixture in the flask was stirred and heated under normal pressure to initiate the reaction. The initiation temperature of the reaction was adjusted to 140°C and the mixture was stirred at the same temperature for two hours. Then, the reaction temperature and the pressure were adjusted to 140 to 150°C and 3.0 to 5.0 kPa, respectively, and the reaction was carried out for 25 hours while distilling off a mixture of the ethylene glycol produced and ethylene carbonate. Thereafter, the pressure was reduced to 0.5 kPa, and the reaction was carried out at 150 to 160°C for additional 10 hours while distilling off ethylene carbonate and diols. Next, 0.08 g of 2-(4-hydroxybutoxy)oxolane was added, and the mixture was stirred at 160°C for one hour. Next, 0.39 g of 2-ethylhexyl acid phosphate as a phosphorus compound was added to the flask, and the mixture in the flask was heated at 100°C for 10 hours to obtain a polycarbonate diol. The analysis results of the obtained polycarbonate diol are shown in Table 1. This polycarbonate diol is abbreviated as PC-10. PC-10 contained a repeating unit represented by the formula (A), a terminal hydroxyl group and an oxolane terminal represented by the formula (F).

[Example 11]

Into a 2 L glass flask fitted with a fractionating column filled with regular fillings and a stirrer was charged 750 g (8.5 mol) of ethylene carbonate, 550 g (6.1 mol) of 1,4-butanediol and 290 g (2.5 mol) of 1,6-hexanediol. In addition, 0.35 g of titanium tetraisopropoxide as a catalyst was added to the flask, and the mixture in the flask was stirred and heated under normal pressure to initiate the reaction. The initiation temperature of the reaction was adjusted to 140°C and the mixture was stirred at the same temperature for two hours. Then, the reaction temperature and the pressure were adjusted to 140 to 150°C and 3.0 to 5.0 kPa, respectively, and the reaction was carried out for 25 hours while distilling off a mixture of the ethylene glycol produced and ethylene carbonate. Thereafter, the pressure was reduced to 0.5 kPa, and the reaction was carried out at 150 to 160°C for additional 7 hours while distilling off ethylene carbonate and diols. Next, 0.28 g of 2-(4-hydroxybutoxy)oxolane was added, and the mixture was stirred at 160°C for one hour. Next, 0.39 g of 2-ethylhexyl acid phosphate as a phosphorus compound was added to the flask, and the mixture in the flask was heated at 100°C for 10 hours to obtain a polycarbonate diol. The analysis results of the obtained polycarbonate diol are shown in Table 1. This polycarbonate diol is abbreviated as PC-11. PC-11 contained a repeating unit represented by the formula (A), a terminal hydroxyl group and an oxolane terminal represented by the formula (F).

[Example 12]

Into a 2 L glass flask fitted with a fractionating column filled with regular fillings and a stirrer was charged 690 g (7.8 mol) of ethylene carbonate, 650 g (7.2 mol) of 1,4-butanediol and 80 g (0.7 mol) of 1,6-hexanediol. In addition, 0.35 g of titanium tetraisopropoxide as a catalyst was added to the flask, and the mixture in the flask was stirred and heated under normal pressure to initiate the reaction. The initiation temperature of the reaction was adjusted to 140°C and the mixture was stirred at the same temperature for two hours. Then, the reaction temperature and the pressure were adjusted to 140 to 150°C and 3.0 to 5.0 kPa, respectively, and the reaction was carried out for 25 hours while distilling off a mixture of the ethylene glycol produced and ethylene carbonate. Thereafter, the pressure was reduced to 0.5 kPa, and the reaction was carried out at 150 to 160°C for additional 20 hours while distilling off ethylene carbonate

and diols. Next, 0.08 g of 2-(4-hydroxybutoxy)oxolane was added, and the mixture was stirred at 160°C for one hour. Next, 0.39 g of 2-ethylhexyl acid phosphate as a phosphorus compound was added to the flask, and the mixture in the flask was heated at 100°C for 10 hours to obtain a polycarbonate diol. The analysis results of the obtained polycarbonate diol are shown in Table 1. This polycarbonate diol is abbreviated as PC-12. PC-12 contained a repeating unit represented by the formula (A), a terminal hydroxyl group and an oxolane terminal represented by the formula (F).

[Example 13]

Into a 2 L glass flask fitted with a fractionating column filled with regular fillings and a stirrer was charged 760 g (8.6 mol) of ethylene carbonate, 380 g (4.2 mol) of 1,4-butanediol and 400 g (4.4 mol) of 2-methyl-1,3-propanediol. In addition, 0.20 g of titanium tetraisopropoxide as a catalyst was added to the flask, and the mixture in the flask was stirred and heated under normal pressure to initiate the reaction. The initiation temperature of the reaction was adjusted to 140°C and the mixture was stirred at the same temperature for two hours. Then, the reaction temperature and the pressure were adjusted to 140 to 150°C and 3.0 to 5.0 kPa, respectively, and the reaction was carried out for 25 hours while distilling off a mixture of the ethylene glycol produced and ethylene carbonate. Thereafter, the pressure was reduced to 0.5 kPa, and the reaction was carried out at 150 to 160°C for additional 10 hours while distilling off ethylene carbonate and diols. Next, 0.05 g of 2-(4-hydroxybutoxy)oxolane was added, and the mixture was stirred at 160°C for one hour. Then, 0.20 g of 2-ethylhexyl acid phosphate as a phosphorus compound was added to the flask, and the mixture in the flask was heated at 100°C for 10 hours to obtain a polycarbonate diol. The analysis results of the obtained polycarbonate diol are shown in Table 1. This polycarbonate diol is abbreviated as PC-13. PC-13 contained a repeating unit represented by the formula (A), a terminal hydroxyl group and an oxolane terminal represented by the formula (F).

[Example 14]

Into a 2 L glass flask fitted with a fractionating column filled with regular fillings and a stirrer was charged 680 g (7.7 mol) of ethylene carbonate, 360 g (4.0 mol) of 1,4-butanediol and 390 g (3.8 mol) of 1,5-pentanediol. In addition, 0.30 g of titanium tetraisopropoxide as a catalyst was added to the flask, and the mixture in the flask was stirred and heated under normal pressure to initiate the reaction. The initiation temperature of the reaction was adjusted to 140°C and the mixture was stirred at the same temperature for two hours. Then, the reaction temperature and the pressure were adjusted to 140 to 150°C and 3.0 to 5.0 kPa, respectively, and the reaction was carried out for 25 hours while distilling off a mixture of the ethylene glycol produced and ethylene carbonate. Thereafter, the pressure was reduced to 0.5 kPa, and the reaction was carried out at 150 to 160°C for additional 10 hours while distilling off ethylene carbonate and diols. Next, 0.06 g of 2-(4-hydroxybutoxy)oxolane was added, and the mixture was stirred at 160°C for one hour. Then, 0.33 g of 2-ethylhexyl acid phosphate as a phosphorus compound was added to the flask, and the mixture in the flask was heated at 100°C for 10 hours to obtain a polycarbonate diol. The analysis results of the obtained polycarbonate diol are shown in Table 1. The amount of a cyclic ether compound in the obtained polycarbonate diol was 5.4 ppm. This polycarbonate diol is abbreviated as PC-14. PC-14 contained a repeating unit represented by the formula (A), a terminal hydroxyl group and an oxolane terminal represented by the formula (F).

[Example 1C]

A polycarbonate diol was obtained in the same manner as in Example 1 except that the amount of 2-(4-hydroxybutoxy)oxolane added was changed to 1.60 g. The analysis results of the obtained polycarbonate diol are shown in Table 1. This polycarbonate diol is abbreviated as PC-23. PC-23 contained a repeating unit represented by the formula (A), a terminal hydroxyl group and an oxolane terminal represented by the formula (F).

[Reference Example 1]

A polycarbonate diol was obtained in the same manner as in Example 1 except that the amount of 2-(4-hydroxybutoxy)oxolane added was changed to 0.02 g. The analysis results of the obtained polycarbonate diol are shown in Table 1. This polycarbonate diol is abbreviated as PC-31. PC-31 contained a repeating unit represented by the formula (A) and a terminal hydroxyl group, but no oxolane terminal represented by the formula (F) was detected. That is, the proportion of the oxolane structure represented by the formula (B) contained in terminals of PC-31 was less than the detection limit (ND: Not Detectable) (shown as "ND" in Table 1), as measured according to the measurement method described above in "1. Determination of terminals of polycarbonate diol".

[Table 1]

| | Hydroxyl value mg-KOH/g | Number average molecular weight | State | | Ti content % by mass | P content % by mass | Oxolane terminal proportion Mol% | Formula (A) | | |
|---|---|---|---|---|---|---|---|---|---|---|
| | | | Room temperature | -5°C | | | | R1 | Mol% | |
| Example 1 | 56.3 | 1993 | Liquid | Liquid | 0.004 | 0.004 | 0.03 | C4 | 51 | PC-1 |
| | | | | | | | | C6 | 49 | |
| Example 2 | 56.5 | 1986 | Liquid | Liquid | 0.004 | 0.004 | 0.09 | C4 | 51 | PC-2 |
| | | | | | | | | C6 | 49 | |
| Example 3 | 56.2 | 1996 | Liquid | Liquid | 0.004 | 0.004 | 0.27 | C4 | 51 | PC-3 |
| | | | | | | | | C6 | 49 | |
| Example 4 | 56.4 | 1989 | Liquid | Liquid | 0.004 | 0.004 | 0.44 | C4 | 51 | PC-4 |
| | | | | | | | | C6 | 49 | |
| Example 5 | 56.6 | 1982 | Liquid | Liquid | 0.004 | 0.004 | 0.05 | C4 | 51 | PC-5 |
| | | | | | | | | C6 | 49 | |
| Example 6 | 55.9 | 2007 | Solid | Liquid | 0.007 | 0.007 | 0.06 | C4 | 28 | PC-6 |
| | | | | | | | | C6 | 72 | |
| Example 7 | 56.1 | 2000 | Solid | Liquid | 0.008 | 0.008 | 0.07 | C4 | 39 | PC-7 |
| | | | | | | | | C6 | 61 | |
| Example 8 | 55.8 | 2011 | Solid | Liquid | 0.007 | 0.007 | 0.06 | C4 | 61 | PC-8 |
| | | | | | | | | C6 | 39 | |
| Example 9 | 56.0 | 2004 | Solid | Liquid | 0.008 | 0.008 | 0.07 | C4 | 71 | PC-9 |
| | | | | | | | | C6 | 29 | |
| Example 10 | 55.9 | 2007 | Solid | Solid | 0.009 | 0.009 | 0.08 | C4 | 91 | PC-10 |
| | | | | | | | | C6 | 9 | |
| Example 11 | 126.1 | 890 | Liquid | Liquid | 0.008 | 0.008 | 0.10 | C4 | 58 | PC-11 |
| | | | | | | | | C6 | 42 | |
| Example 12 | 41.9 | 2678 | Solid | Solid | 0.009 | 0.009 | 0.10 | C4 | 8 | PC-12 |
| | | | | | | | | C6 | 92 | |

(continued)

| | Hydroxyl value mg-KOH/g | Number average molecular weight | State | | Ti content % by mass | P content % by mass | Oxolane terminal proportion Mol% | Formula (A) | | |
|---|---|---|---|---|---|---|---|---|---|---|
| | | | Room temperature | -5°C | | | | R1 | Mol% | |
| Example 13 | 59.4 | 1889 | Liquid | Liquid | 0.005 | 0.005 | 0.05 | C4 | 48 | PC-13 |
| | | | | | | | | MPD | 52 | |
| Example 14 | 58.4 | 1921 | Liquid | Liquid | 0.007 | 0.007 | 0.05 | C4 | 51 | PC-14 |
| | | | | | | | | C5 | 49 | |
| Example 1A | 56.4 | 1989 | Liquid | Liquid | 0.004 | 0.004 | 0.008 | C4 | 51 | PC-21 |
| | | | | | | | | C6 | 49 | |
| Example 1B | 56.3 | 1993 | Liquid | Liquid | 0.004 | 0.004 | 0.58 | C4 | 51 | PC-22 |
| | | | | | | | | C6 | 49 | |
| Example 1C | 56.7 | 1979 | Liquid | Liquid | 0.004 | 0.004 | 1.2 | C4 | 51 | PC-23 |
| | | | | | | | | C6 | 49 | |
| Reference Example 1 | 56.2 | 1996 | Liquid | Liquid | 0.004 | 0.004 | ND | C4 | 51 | PC-31 |
| | | | | | | | | C6 | 49 | |

* In Table 1, C4, C5 and C6 represent $(CH_2)_4$, $(CH_2)_5$ and $(CH_2)_6$ in that order, and MPD represents $(CH_2)_2CH(CH_3)(CH_2)_2$.

[Application Example 1]

Forty grams of a polycarbonate diol PC-1, 0.75 g of BYK-331 (manufactured by BYK-Chemie GmbH) as a leveling agent, 1.25 g of a dibutyltin laurate solution which had been prepared by dissolving dibutyltin laurate in a thinner (xylene/butyl acetate = 70/30 (mass ratio)) to provide a concentration of a 2% by mass, and 40 g of the thinner were mixed and stirred to obtain a coating base material. 7.5 Grams of an organic polyisocyanate (DURANATE TPA-100; manufactured by Asahi Kasei Chemicals Corporation; isocyanate (NCO) content: 23.1%) as a curing agent was added to the obtained coating base material to prepare a coating composition. Physical properties were evaluated using the coating composition. The evaluation results were shown in Table 2.

[Application Examples 2 to 12]

A coating composition was obtained in the same manner as in Application Example 1 except any one of PC-2 to PC-10 and PC-13 and PC-14 was used as a polycarbonate diol. Physical properties were evaluated using the coating composition. The evaluation results were shown in Table 2.

[Application Examples 1A to 1C]

A coating composition was obtained in the same manner as in Application Example 1 except any one of PC-21 to PC-23 was used as a polycarbonate diol. Physical properties were evaluated using the coating composition. The evaluation results were shown in Table 2.

[Reference Application Example 1]

A coating composition was obtained in the same manner as in Application Example 1 except PC-31 was used as a polycarbonate diol. Physical properties were evaluated using the coating composition. The evaluation results were shown in Table 2.

[Table 2]

| | Polycarbonate diol used | Chemical resistance | Adhesion |
|---|---|---|---|
| Application Example 1 | PC-1 | 0 | 1 |
| Application Example 2 | PC-2 | 0 | 0 |
| Application Example 3 | PC-3 | 1 | 0 |
| Application Example 4 | PC-4 | 1 | 0 |
| Application Example 5 | PC-5 | 0 | 0 |
| Application Example 6 | PC-6 | 1 | 1 |
| Application Example 7 | PC-7 | 1 | 0 |
| Application Example 8 | PC-8 | 0 | 0 |
| Application Example 9 | PC-9 | 0 | 0 |
| Application Example 10 | PC-10 | 0 | 0 |
| Application Example 11 | PC-13 | 0 | 0 |
| Application Example 12 | PC-14 | 1 | 0 |
| Application Example 1A | PC-21 | 0 | 4 |
| Application Example 1B | PC-22 | 2 | 0 |
| Application Example 1C | PC-23 | 3 | 0 |
| Reference Application Example 1 | PC-31 | 0 | 4 |

In the results of Table 2, when the grade of "5" is referred to "poor" in both the evaluation results of chemical resistance and adhesion, it was confirmed that each of the polycarbonate diols according to one embodiment of the present embodiment could keep the evaluation result of chemical resistance in the range of "0 to 4" (preferably in the

range of "0 to 3" and more preferably in the range of "0 to 2"), and/or it could keep the evaluation result of adhesion in the range of "0 to 4" (preferably in the range of "0 to 3" and more preferably in the range of "0 to 2").

[Application Example 13]

Into a separable flask was charged 110 g of a polycarbonate diol PC-1, 55 g of diphenylmethane-4,4-diisocyanate, 100 g of N,N-dimethylformamide and 0.02 g of dibutyltin dilaurate as a catalyst, and they were allowed to react at 80°C for two hours to obtain a urethane polymer. Then, 9.9 g of 1,4-butanediol as a chain extender and 308 g of N,N-dimethylformamide were added dropwise thereto and reacted for additional four hours to obtain a polyurethane resin solution. The obtained polyurethane resin solution was cast on a glass plate and allowed to stand at room temperature for 30 minutes to evaporate the solvent, followed by drying in a dryer at 100°C for two hours to obtain a polyurethane film. Physical properties were evaluated using the polyurethane film. The evaluation results were shown in Table 3.

[Application Examples 14 to 24]

A polyurethane film was obtained in the same manner as in Application Example 13 except any one of PC-2 to PC-10 and PC-13 and PC-14 was used as a polycarbonate diol. Physical properties were evaluated using the polyurethane film. The evaluation results were shown in Table 3.

[Reference Application Examples 2A to 2C]

A polyurethane film was obtained in the same manner as in Application Example 13 except any one of PC-21 to PC-23 was used as a polycarbonate diol. Physical properties were evaluated using the polyurethane film. The evaluation results were shown in Table 3.

[Reference Application Example 2]

A polyurethane film was obtained in the same manner as in Application Example 13 except PC-31 was used as a polycarbonate diol. Physical properties were evaluated using the polyurethane film. The evaluation results were shown in Table 3.

[Table 3]

| | Polycarbonate diol used | Flexibility MPa | Strength MPa | Elongation % | Heat resistance % |
|---|---|---|---|---|---|
| Application Example 13 | PC-1 | 2.1 | 39 | 900 | 96 |
| Application Example 14 | PC-2 | 2.0 | 39 | 890 | 95 |
| Application Example 15 | PC-3 | 2.0 | 37 | 860 | 93 |
| Application Example 16 | PC-4 | 1.9 | 35 | 950 | 92 |
| Application Example 17 | PC-5 | 2.1 | 38 | 900 | 95 |
| Application Example 18 | PC-6 | 2.4 | 45 | 670 | 96 |
| Application Example 19 | PC-7 | 2.3 | 43 | 790 | 96 |
| Application Example 20 | PC-8 | 2.4 | 41 | 800 | 95 |
| Application Example 21 | PC-9 | 2.5 | 42 | 760 | 94 |
| Application Example 22 | PC-10 | 2.7 | 46 | 690 | 93 |
| Application Example 23 | PC-13 | 2.8 | 20 | 900 | 93 |
| Application Example 24 | PC-14 | 2.0 | 39 | 910 | 96 |
| Application Example 2A | PC-21 | 2.1 | 38 | 890 | 95 |
| Application Example 2B | PC-22 | 1.8 | 30 | 800 | 89 |
| Application Example 2C | PC-23 | 1.9 | 25 | 750 | 88 |

(continued)

| | Polycarbonate diol used | Flexibility MPa | Strength MPa | Elongation % | Heat resistance % |
|---|---|---|---|---|---|
| Reference Application Example 2 | PC-22 | 2.4 | 40 | 720 | 96 |

## Claims

1. A polycarbonate diol comprising a repeating unit represented by the following formula (A) and a terminal hydroxyl group,

   wherein more than 0 mol% and not more than 3.0 mol% of the terminals thereof is an oxolane terminal represented by the following formula (B):

   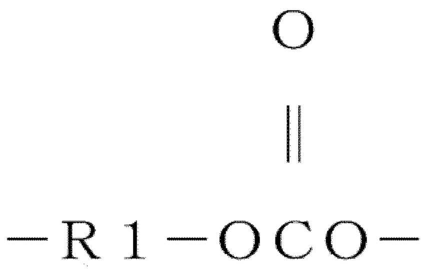
   (A)

   wherein R1 represents a divalent aliphatic or alicyclic hydrocarbon having 2 to 12 carbon atoms; and

   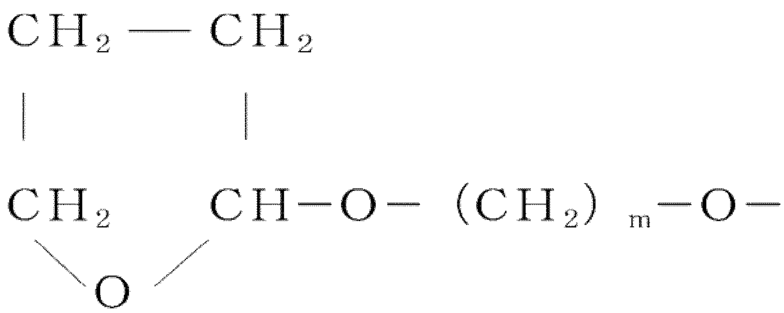
   (B)

   wherein m represents an integer of 1 to 6.

2. The polycarbonate diol according to claim 1, wherein the repeating unit represented by the formula (A) comprises a repeating unit represented by the following formula (C) and a repeating unit represented by the following formula (D),

   wherein a molar ratio of the repeating unit represented by the following formula (C) to the repeating unit represented by the following formula (D) (formula (C):formula (D)) is 10:90 to 90:10:

   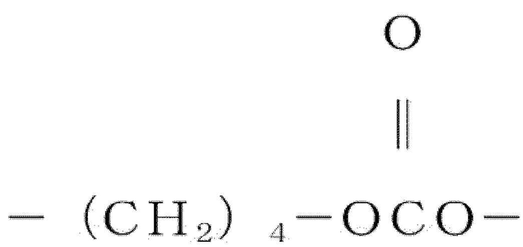
   (C)

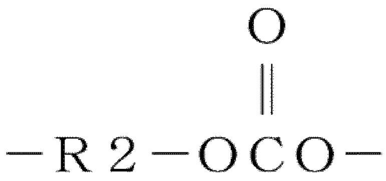

(D)

wherein R2 represents a divalent aliphatic or alicyclic hydrocarbon having 3 to 8 carbon atoms, different from $-(CH_2)_4-$ in the formula (C).

**3.** The polycarbonate diol according to claim 2, wherein the repeating unit represented by the formula (D) comprises a repeating unit represented by the following formula (E):

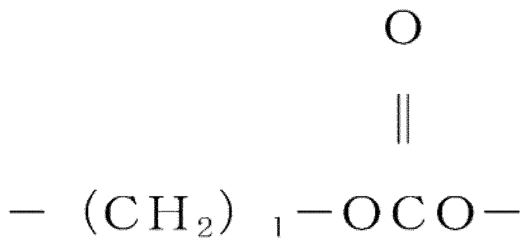

(E)

wherein 1 represents an integer of 3 to 6 excluding 4.

**4.** The polycarbonate diol according to any one of claims 1 to 3, wherein the oxolane terminal represented by the formula (B) comprises an oxolane terminal represented by the following formula (F):

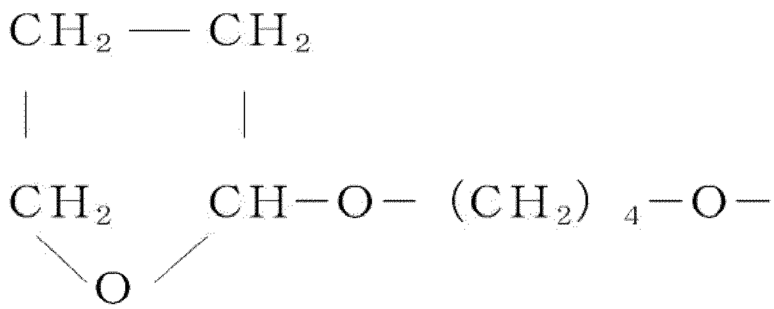

(F)

.

**5.** A coating composition comprising the polycarbonate diol according to any one of claims 1 to 4 and an organic polyisocyanate.

**6.** A coating composition comprising a urethane prepolymer obtained by reacting the polycarbonate diol according to any one of claims 1 to 4 with an organic polyisocyanate, wherein the urethane prepolymer has a terminal isocyanate group.

**7.** A coating composition comprising a polyurethane resin obtained by reacting the polycarbonate diol according to any one of claims 1 to 4, an organic polyisocyanate and a chain extender with each other.

**8.** A water-based coating composition comprising a polyurethane obtained by reacting water, the polycarbonate diol according to any one of claims 1 to 4, an organic polyisocyanate and a chain extender with each other.

**9.** A thermoplastic polyurethane obtained by using the polycarbonate diol according to any one of claims 1 to 4 and an organic polyisocyanate.

**Patentansprüche**

1. **1.** Polycarbonatdiol, umfassend eine durch die folgende Formel (A) dargestellte sich wiederholende Einheit und eine endständige Hydroxylgruppe,

   wobei mehr als 0 Mol-% und nicht mehr als 3,0 Mol-% der Termini davon ein durch die folgende Formel (B) dargestellter Oxolan-Terminus ist:

   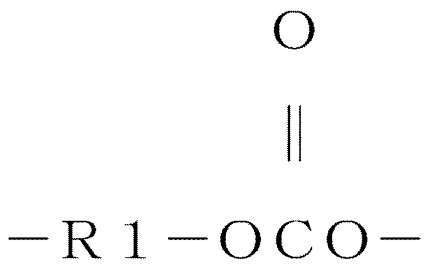

   (A)

   worin R1 einen zweiwertigen aliphatischen oder alicyclischen Kohlenwasserstoff mit 2 bis 12 Kohlenstoffatomen darstellt; und

   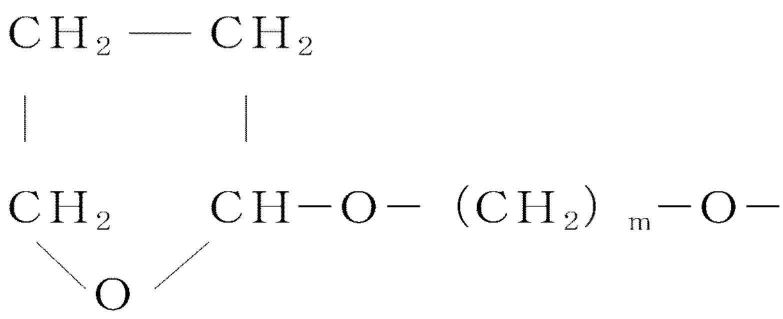

   (B)

   worin m eine ganze Zahl von 1 bis 6 darstellt.

2. **2.** Polycarbonatdiol nach Anspruch 1,

   wobei die durch die Formel (A) dargestellte sich wiederholende Einheit eine durch die folgende Formel (C) dargestellte sich wiederholende Einheit und eine durch die folgende Formel (D) dargestellte sich wiederholende Einheit umfasst,
   wobei ein Molverhältnis der sich wiederholenden Einheit der folgenden Formel (C) zu der sich wiederholenden Einheit der folgenden Formel (D) (Formel (C):Formel (D)) 10:90 bis 90:10 beträgt:

   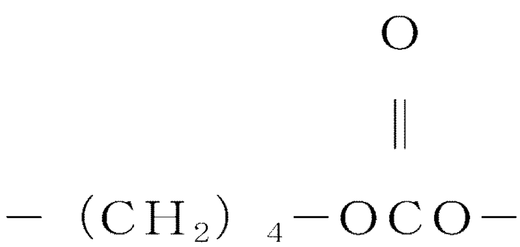

   (C)

   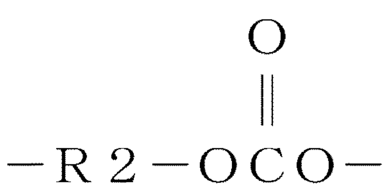

   (D)

worin R2 einen von $-(CH_2)_4-$ in der Formel (C) verschiedenen zweiwertigen aliphatischen oder alicyclischen Kohlenwasserstoff mit 3 bis 8 Kohlenstoffatomen darstellt.

**3.** Polycarbonatdiol nach Anspruch 2, wobei die durch die Formel (D) dargestellte sich wiederholende Einheit eine sich wiederholenden Einheit der Formel (E) umfasst:

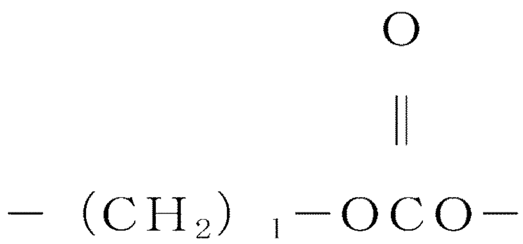

(E)

wobei l eine ganze Zahl von 3 bis 6, ausgenommen 4, darstellt.

**4.** Polycarbonatdiol nach einem der Ansprüche 1 bis 3, wobei der durch die Formel (B) dargestellt Oxolan-Terminus einen durch die folgende Formel (F) dargestellten Oxolan-Terminus umfasst:

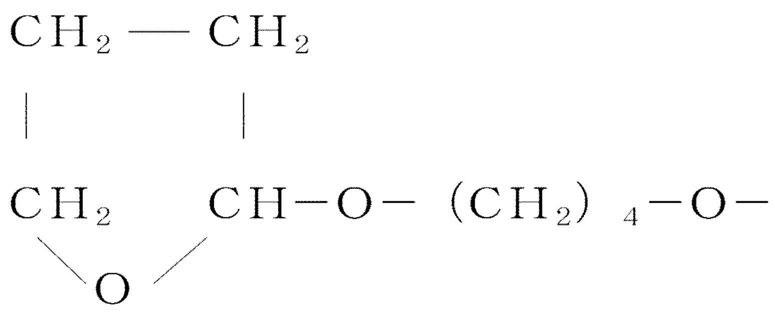

(F)

.

**5.** Beschichtungszusammensetzung, welche das Polycarbonatdiol nach einem der Ansprüche 1 bis 4 und ein organisches Polyisocyanat enthält.

**6.** Beschichtungszusammensetzung, welche ein durch Umsetzen des Polycarbonatdiols nach einem der Ansprüche 1 bis 4 mit einem organischen Polyisocyanat erhaltenes Urethan-Prepolymer enthält, wobei das Urethan-Prepolymer einen endständige Isocyanatgruppe aufweist.

**7.** Beschichtungszusammensetzung, welche ein Polyurethanharz enthält, das durch Umsetzen des Polycarbonatdiols nach einem der Ansprüche 1 bis 4, eines organischen Polyisocyanats und eines Kettenverlängerungsmittels miteinander erhalten wurde.

**8.** Beschichtungszusammensetzung auf Wasserbasis, welche ein Polyurethan enthält, das durch Umsetzen von Wasser, dem Polycarbonatdiol nach einem der Ansprüche 1 bis 4, einem organischen Polyisocyanat und einem Kettenverlängerungsmittel miteinander erhalten wurde.

**9.** Thermoplastisches Polyurethan, das unter Verwendung des Polycarbonatdiols nach einem der Ansprüche 1 bis 4 und eines organischen Polyisocyanats erhalten wurde.

## Revendications

**1.** Polycarbonate diol comprenant un motif répétitif représenté par la formule (A) suivante et un groupe hydroxyle terminal,

dans lequel plus de 0 % en mol et pas plus de 3,0 % en mol des terminaisons de celui-ci est constitué d'une terminaison oxolane représentée par la formule (B) suivante :

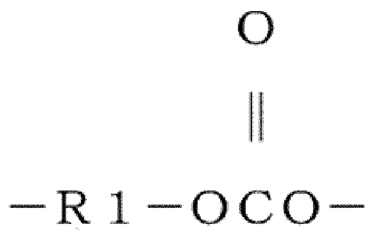

(A)

dans lequel R1 représente un hydrocarbure divalent, aliphatique ou alicyclique, comportant 2 à 12 atomes de carbone ; et

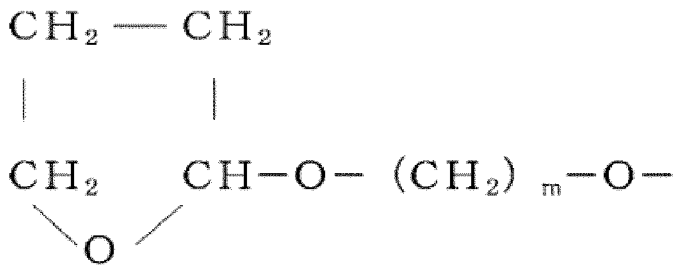

(B)

dans lequel m représente un nombre entier de 1 à 6.

**2.** Polycarbonate diol selon la revendication 1, dans lequel le motif répétitif représenté par la formule (A) comprend un motif répétitif représenté par la formule (C) suivante et un motif répétitif représenté par la formule (D) suivante,

dans lequel un rapport molaire du motif répétitif représenté par la formule (C) suivante au motif répétitif représenté par la formule (D) suivante (formule (C) : formule (D)) est de 10 : 90 à 90 : 10 :

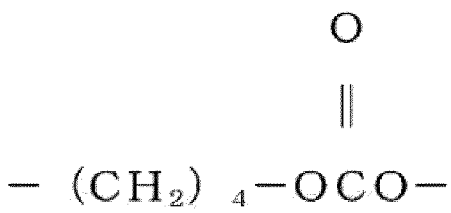

(C)

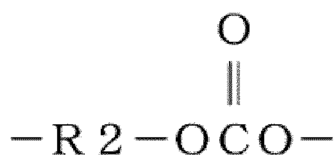

(D)

dans lequel R2 représente un hydrocarbure divalent, aliphatique ou alicyclique, comportant 3 à 8 atomes de carbone, différent de $-(CH_2)_4-$ dans la formule (C).

**3.** Polycarbonate diol selon la revendication 2, dans lequel le motif répétitif représenté par la formule (D) comprend un motif répétitif représenté par la formule (E) suivante :

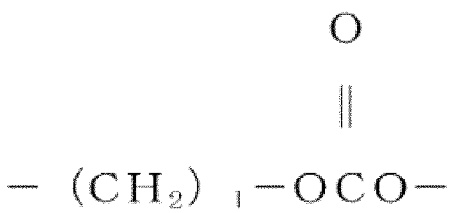

(E)

dans lequel 1 représente un nombre entier de 3 à 6 à l'exclusion de 4.

4. Polycarbonate diol selon l'une quelconque des revendications 1 à 3, dans lequel la terminaison oxolane représentée par la formule (B) comprend une terminaison oxolane représentée par la formule (F) suivante :

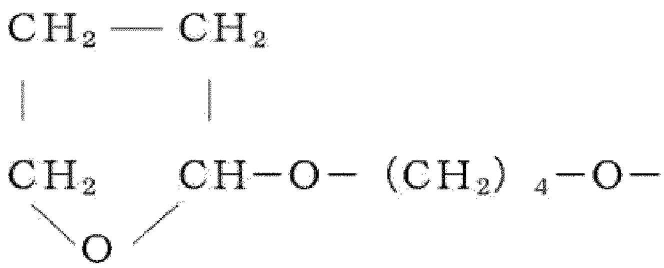

(F)

.

5. Composition de revêtement comprenant le polycarbonate diol selon l'une quelconque des revendications 1 à 4 et un polyisocyanate organique.

6. Composition de revêtement comprenant un prépolymère d'uréthane obtenue par réaction du polycarbonate diol selon l'une quelconque des revendications 1 à 4 avec un polyisocyanate organique, dans laquelle le prépolymère d'uréthane comporte un groupe isocyanate terminal.

7. Composition de revêtement comprenant une résine de polyuréthane obtenue par réaction du polycarbonate diol selon l'une quelconque des revendications 1 à 4, d'un polyisocyanate organique et d'un allongeur de chaîne les uns avec les autres.

8. Composition de revêtement à base d'eau comprenant un polyuréthane obtenue par réaction d'eau, du polycarbonate diol selon l'une quelconque des revendications 1 à 4, d'un polyisocyanate organique et d'un allongeur de chaîne les uns avec les autres.

9. Polyuréthane thermoplastique obtenu par utilisation du polycarbonate diol selon l'une quelconque des revendications 1 à 4 et d'un polyisocyanate organique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015194670 A
- JP 6252070 B
- JP 5013159 B
- US 5070173 A


### Non-patent literature cited in the description


- **SCHNELL.** *Polymer Reviews,* 1994, vol. 9, 9-20